# EUROPEAN PATENT SPECIFICATION

(11) **EP 2 919 630 B1**
(45) Date of publication and mention of the grant of the patent: **03.01.2018**
(21) Application number: 13808260.7
(22) Date of filing: 15.11.2013
(51) Int. Cl.: A47J 31/54

(54) **METHOD FOR DISPENSING A MILK-CONTAINING COMPOSITION AND DISPOSABLE HEAT EXCHANGER FOR USE IN THE METHOD**
VERFAHREN ZUR ABGABE EINER MILCHHALTIGEN ZUSAMMENSETZUNG UND EINWEGWÄRMETAUSCHER ZUR VERWENDUNG IN DIESEM VERFAHREN
PROCÉDÉ POUR DISTRIBUER UNE COMPOSITION CONTENANT DU LAIT ET ÉCHANGEUR DE CHALEUR JETABLE POUR L'UTILISATION DANS LE PROCÉDÉ

(30) Priority: 15.11.2012 NL 2009816
(43) Date of publication of application: 23.09.2015
(73) Proprietor: Equitec Holding B.V., 6921 RK Duiven (NL)
(72) Inventor: DREVES, Tonny, NL-6921 RK Duiven (NL); VAN BOMMEL, Petrus Johannes Maria, NL-5581 AG Waalre (NL); HOLTEN, Hendrikus Lodewijk Jozeph Franciscus, NL-6983 BB Doesburg (NL)
(74) Representative: Algemeen Octrooi- en Merkenbureau B.V.
(86) International application number: PCT/NL2013/050826
(87) International publication number: WO 2014/077692

(56) References cited:
- WO-A2-2012/161571
- GB-A- 2 397 637
- JP-A- 2002 119 586
- US-A1- 2011 198 066
- US-B1- 6 192 785

## Description

A first aspect of the invention relates to a method for dispensing a milk-containing composition in accordance with the preamble of claim 1. The term "milk product" is understood to mean both animal and vegetable milk products, in pure, concentrated or diluted form. In the latter case, diluting can take place by means of heated water, for example, which heated water is supplied prior to heating the milk product by means of the heat exchanger. The terms "removable heat exchanger" and "disposable heat exchanger" as used herein are understood to refer to a heat exchanger designed for being exchanged for another heat exchanger after a specified period of time or after being used a specified number of times in apparatus of which the heat exchanger forms part. Said other heat exchanger may be a cleaned heat exchanger or a completely new heat exchanger for first use. In the former case, the disposable heat exchanger can be disposed after being cleaned a specified number of times. Within the context of the present document, a heat exchanger forming an integral part of an apparatus is in principle not considered to be disposable. Within the framework of the present invention, the terms "before" and "after" the heat exchanger can be broadly interpreted as before and after, respectively, heating by means of the heat exchanger. In that sense the heat exchanger is thus understood to be the part of a heat exchanger module in which heat exchange actually takes place in use.

Such a method and a heat exchanger for use in such a method are described in non-prepublished International patent application PCT/NL2012/050344. Further research in the field of development of apparatus for preparing milk-containing compositions and vending machines in which such a heat exchanger is used has led to specific improvements to which the present patent application relates.

In the last few years, the trend has been to consume a larger variation of coffee types. These new coffee products contain considerably more milk than the coffee products that have been usual so far. Think in this regard of Latte Macchiato, Cappucino or "café au lait", for example. To prepare these, a flavour composition, preferably coffee, is added to the heated milk product in an amount of 25-45 vol. % of the milk-containing composition. Said adding can be done in any order, viz. first (part of) the milk product, then the flavour composition and subsequently (possibly) another part of the milk product. Furthermore, the heated milk product may be frothed by providing the outlet with an air inlet, all this as described in the below-mentioned US patent applications and the WO 2011 publication.

A method and device for preparing a milk-containing coffee product is also known from International patent application WO2011/028117. This international patent application relates to a system for controlling the frothing of the coffee product. Such a method for promoting the frothing of a coffee product is also known from US patent application 2009/0068331 (corresponding to EP-A-2 036 472) and US patent application 2009/0087532 (corresponding to EP-A-2 042 063).

However, the object according to the first aspect of the invention is to make the remaining milk product in a heat exchanger keep longer, using the method according to the invention, by reducing the temperature of the milk product that remains behind in the heat exchanger to a relatively low level when the present apparatus or vending machine is not in use, so that deterioration is practically excluded, or at least the risk of deterioration is considerably reduced. Thus, the apparatus and the piping that comes into contact with the milk product need not be rinsed, which rinsing in known apparatus or vending machines is required after every dispensing action and every end-of-day cleaning. This known cleaning action is less desirable for environmental reasons and, in addition, puts the apparatus or vending machine out of action for a prolonged length of time. The method and the device according to the invention are furthermore less labour-intensive.

The method according to the invention as mentioned in the introduction is characterised in that the milk product that remains in the heat exchanger after the latter has been emptied for the larger part is cooled by means of the heat exchanger after a specified period of time, calculated from the last time dispensing of the milk-containing composition took place, or at least from the last delivery of heated milk product from the heat exchanger, so that it will keep for a comparatively prolonged period of time, and is subsequently heated for a next dispensing action and replenished with a next amount of milk product shortly before being mixed with the flavour composition, whereupon the hot milk-containing composition is discharged. By "remaining part of the milk product in the heat exchanger" is meant that the heat exchanger has been emptied for more than 50 vol. %, preferably more than 75 vol. %.

A milk-containing composition as referred to herein may be composed of several components, such as milk product and a flavour composition comprising one or more ingredients. Said components can be mixed together at various moments during the execution of method in order to obtain the milk-containing composition. When components are added to the milk product after the milk product has been heated by the heat exchanger, the heat exchanger only needs to heat the milk product and other components can be heated separately, if desired. The milk product, or at least the substance to be heated by the heat exchanger, is led into the heat exchanger through the flexible tube in use. The heated milk product and the flavour composition are preferably mixed after heating by the heat exchanger. Emptying the heat exchanger in that case implies that at least said tube is emptied after heating of the milk product has taken place. The heated milk product remaining in the tube is then cooled.

Emptying the flexible conduit in the heat exchanger preferably takes place by discharging the last part of the desired amount of milk product from the heat exchanger. An advantage of this is that the milk product removed from the flexible tube is usefully utilised in the milk-containing flavour composition and need not be discharged as a waste product. Said emptying can be done, for example, by stopping the supply of the milk product and removing the milk product present in the flexible tube of the heat exchanger for the most part. In a heat exchanger in which the milk product in the flexible tube is heated by means of a fluid, for example hot water that surrounds the flexible tube, this can take place by removing the milk product from the tube under the influence of the fluid (water) in the outer part of the heat exchanger, which is under a pressure different from the pressure that prevails in the inner tube.

The term "flavour composition" is preferably understood to mean a coffee- or tea-containing composition. Another preferred flavour composition is a mixture comprising cocoa and sugar. Other flavour compositions are air and water. Although air and water do not have much flavour of their own, the addition thereof to the product does have an effect on the taste of the milk-containing composition thus formed. Air can be used for frothing the milk product, so that a user will have a different taste experience than in the case of a non-frothed milk product. Water dilutes a milk product, so that the taste of the milk product will be flatter. If, incidentally, water is added to milk (concentrate) before it is supplied to the heat exchanger, said water is not considered to be a flavour composition, but in that case the mixture of milk (concentrate) and water is considered to be the milk product. According to another possibility, one or more of the aforesaid or other flavour compositions are mixed with the milk product in one or more steps. Within the framework of the present invention, the flavour composition is a multiple flavour composition in that case.

Preferably at least 50%, more preferably at least 60% or at least 75% of the milk product present in the heat exchanger is removed from the heat exchanger when the heat exchanger is emptied for the most part. The more milk product that is removed, the smaller the amount of bacteria that can develop in the flexible tube. In addition, a smaller amount of the product can be cooled more quickly, which further reduces (the risk of) bacterial growth.

It will be understood that the heat exchanger will be empty for the larger part after the last delivery of milk product and that the part that remains in the heat exchanger will subsequently be cooled. Said cooling can be carried out, for example, in that hot fluid that surrounds the flexible tube in the heat exchanger is removed from the heat exchanger and a relatively cold fluid is led into the heat exchanger instead thereof. The milk product present in the flexible tube is thus cooled.

It is preferable if the period of time between two discharges of a milk-containing composition is determined and that the heat exchanger is emptied for the greater part when a predetermined period of time is exceeded, wherein in particular the milk product that remains behind in the heat exchanger is cooled so as to minimise deterioration. This makes it possible to delay the cooling of the milk product that is present in the heat exchanger. Thus an optimum can be selected between on the one hand the need for quickly cooling the milk product that remains in the heat exchanger so as to minimise deterioration and preventing milk product remaining behind in the heat exchanger from being cooled and being heated again very shortly thereafter at a (too) high frequency, since this process involves a loss of energy. In practice, determining the period of time between two discharges of a milk-containing flavour composition means that a time registration is started after the delivery of a milk- containing flavour composition and that cooling is initiated when the predetermined period of time is exceeded. It is not necessary in that case to have the time registration continue until a next delivery of a milk-containing flavour composition. Measuring and storing the time duration between two successive dispensing actions can be useful for determining an optimum value of the predetermined period of time. Within the framework of the present invention, the period between two successive deliveries of a milk-containing flavour composition can furthermore be exchanged for the period of time between two dispensing actions of heated milk product from the heat exchanger.

It is preferable if the predetermined period of time to be exceeded before cooling is initiated is set to at least 5 minutes. Preferably, the predetermined period of time is set to at most 120 minutes, preferably at most 60 minutes, furthermore preferably 30 minutes, i.e. to a period of time ranging between 5 and 30 minutes. Preferably, setting means are provided by means of which a user can set the period of time himself. This can for example be done in dependence on the location where the method is carried out by means of a device, but also in dependence on the time of the day or the day of the week. The period of time can be set so that an optimum is reached between risk of deterioration and energy consumption.

It is furthermore preferable in that regard if the remaining amount of milk product that is still present in the heat exchanger is cooled to a temperature lower than 10°C. Because a relatively small amount of milk remains behind in the heat exchanger, it can be said that it is a film-like amount. That is, the tube is not entirely filled but slightly flattened or slightly sucked empty. The period of time can be measured and set at various places, viz. at the inlet of the milk product into the heat exchanger, at the outlet of the milk product from the heat exchanger or at the outlet of the milk-containing composition from apparatus or a vending machine designed for carrying out the method according to the present invention. The term "vending machine" must be given a broad interpretation, because such a vending machine is capable of dispensing coffee, but also milk, tea and the like. The term "apparatus" is understood to mean an apparatus which can be used separately from a vending machine as a "stand-alone" apparatus in the catering industry or the like.

It is preferable if the supply of the milk product to the heat exchanger takes place continuously during the delivery of the heated milk product and that, after the supply of milk product has been interrupted at the moment when the last amount of milk product that is required is present in the heat exchanger, said amount is for the most part forced out of the heat exchanger, so that only 10-25 vol. % of the heated milk product will remain behind in the heat exchanger. It will be understood that in order to (be able to) minimise the amount of milk product that remains behind, the dispensing of milk product, which takes place by removing the last amount of milk product from the heat exchanger, will continue for some time after the continuous supply of milk product to the heat exchanger has stopped.

It is preferable if the heat exchanger is communicatively connected to a package of the milk product and if the removal of the heat exchanger is carried out together with the removal of the entirely or partially emptied package of the milk product. This reduces the risk of contamination or deterioration of the milk product.

In the practical implementation of the invention, it is preferable if the milk product is present in the apparatus in a package that is known per se as a "bag-in-box" (BIB) having a capacity of 5 or 10 litres, for example. In such an embodiment, the refrigerated milk product is supplied from the bag to the heat exchanger and the package and the heat exchanger are removed from the apparatus after the contents of the bag have been emptied. Rinsing of the heat exchanger and the conduits connected thereto is thus not necessary.

A second aspect of the present invention relates to a disposable heat exchanger provided with a flexible coil and a product inlet and a product outlet for a perishable product, such as a milk product, on the one hand and a medium inlet and a medium outlet for a cooling or heating medium on the other hand. The flexible coil is preferably a flexible tube. The product inlet and the product outlet are preferably provided on the flexible coil so as to make it possible to pass a perishable product through the flexible coil of the heat exchanger. The heat exchanger preferably further comprises an outer bag, which surrounds the flexible coil at least for the most part. The outer bag is in that case provided with the medium inlet and the medium outlet, so that a heating or cooling medium can flow through the outer bag for heating or cooling, as the case may be, product present in the flexible coil.

According to the second aspect of the invention, in order to reduce the risk of contamination or deterioration of the milk product that remains behind in the heat exchanger, the product inlet of the heat exchanger of the product to be cooled/heated is connected, or at least is to be connected, to a product package in which a particular amount of perishable product is present, wherein the product outlet of the heat exchanger is combined with a flavour composition inlet of the flavour composition and wherein the coil of the heat exchanger is surrounded by the outer bag for the supply and discharge of the heating/cooling medium, which heat exchanger is designed for use in a method according to the first aspect of the present invention. The product inlet may be integrally connected to the product package. Alternatively, the product inlet may be detachably connected to the product package or be provided with connecting means for connecting the product inlet to the product package. The heat exchanger is provided with connecting means for connecting the outlet to a flavour composition inlet, so that the milk product can be combined, i.e. mixed, with the flavour composition. Combining the product outlet of the heat exchanger and the flavour composition inlet may just as well take place outside the heat exchanger for that matter, for example by means of two parallel outlets which discharge above a platform on which a cup is to be placed, in which cup the heated milk product and the flavour composition are (can be) combined.

Optionally, the discharge line of the heat exchanger is provided with an air inlet for frothing the heated milk product.

The heat exchanger may be provided with a frothing module, which is preferably disposed within the heat exchanger.

Furthermore, a water inlet may be provided near a supply line for the supply of the milk product, which water inlet is designed for diluting a milk product concentrate to be used.

In a preferred embodiment, the heat exchanger and the package of the milk product are designed as an integral unit, wherein the product inlet is located inside the unit and the product outlet is provided outside the unit. Placing the product inlet inside the unit prevents contamination of the product when the heat exchanger with an integrated product package is put into use. Placing the product outlet outside the unit makes it possible to connect it to an apparatus.

A third aspect of the present invention relates to a unit of heat exchanger and package comprising, or at least containing, the packaged milk product, wherein the product package is of the "bag in box (BIB)" type.

A fourth aspect of the present invention relates to a vending machine provided with an inlet for the flavour composition and with a packaged milk product connected to a heat exchanger, wherein a method according to the first aspect of the present invention is used in the vending machine, and/or which is provided with a disposable heat exchanger according to the second aspect of the present invention.

The heat exchanger is designed so that the milk product having a temperature of 60-80°C can be mixed with the flavour composition, in particular coffee. It will be understood that if the milk product were to be maintained at a temperature of 60-80°C, without any milk-containing composition being dispensed, the milk product would be strongly liable to deterioration. After a last delivery, for the time being, of the milk-containing composition, less than 10 ml of milk product will remain behind in the heat exchanger having a capacity of e.g. 20 ml. If a period of time of, for example, 5 minutes is exceeded and the coil of the heat exchanger is for the most part emptied, said coil will be cooled to a temperature below 10 °C, preferably 5-7 °C. As soon as the apparatus is activated again to dispense the milk-containing composition, the heat exchanger will be heated and the milk product present therein will be replenished with milk product that is subsequently dispensed as a heated milk product. If there is a relatively continuous demand for milk-containing compositions, it will not be necessary to carry out a cooling step.

The heat exchanger according to the invention will now be explained in more detail with reference to the following description, in which reference is made to the appended drawing, in which:
Figure 1 is a schematic, perspective view of a heat exchanger;
Figure 2 is a schematic, perspective view of a heat exchanger according to the present invention, and
Figure 3 shows a flow diagram of an exemplary embodiment of a method according to the present invention.

In the figures, numeral 1 indicates an embodiment of a heat exchanger, and numeral 2 indicates a flexible tube in the form of a loop-shaped coil through which the milk product to be heated or cooled can flow. In this embodiment, the loop-shaped coil is a conduit having a length of about 3 m and a thickness of 2-4 mm. The supply of the milk product takes place at the product inlet 3 and the discharge of the milk product takes place at the product outlet 4. In the product outlet, a clock symbol schematically indicates a time registration, which registers the time that has passed after the last delivery of heated milk product from the heat exchanger 1, 11. In order to make it possible to dilute a milk product concentrate with water, an additional water inlet 9 is provided. In this case the water inlet 9 discharges into the flexible tube of the heat exchanger 11, but it is also possible to have the water inlet discharge into the product inlet 3 or even elsewhere into product to be heated or being heated by the heat exchanger. The heat exchanger 1, 11 is heated in use by supplying a heating medium, such as relatively hot water, to an outer bag 6 via a medium inlet 8, which medium is discharged via a medium outlet 7. The heat exchanger 1, 11 is cooled in use by supplying a cooling medium, such as relatively cold water, to the outer bag 6 via the medium outlet 7, which medium is discharged via the medium inlet 8. The outer bag 6 is shown to be transparent in the figures, but it will be understood that it is located within the circumferential edges and sealingly surrounds the flexible tube 2.

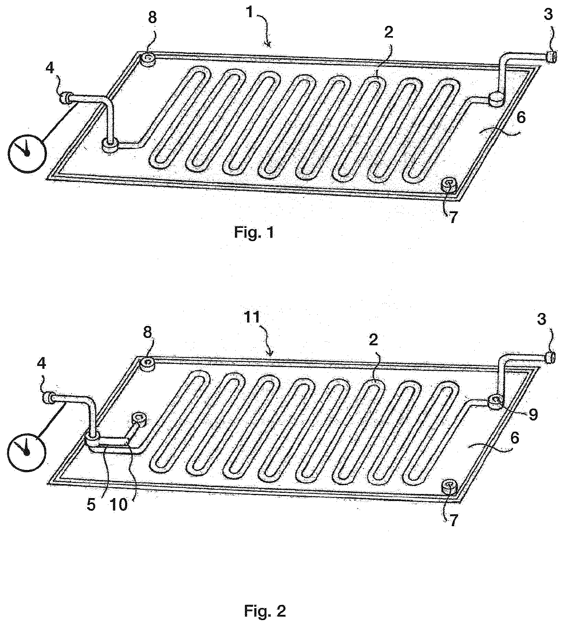

In figure 2, elements corresponding to elements shown in figure 1 are indicated by the same numerals. As shown in figure 2, an accessory 5 may be disposed before the product outlet 4 in a heat exchanger 11 for frothing the heated milk product. An additional air inlet 10 is to that end provided.

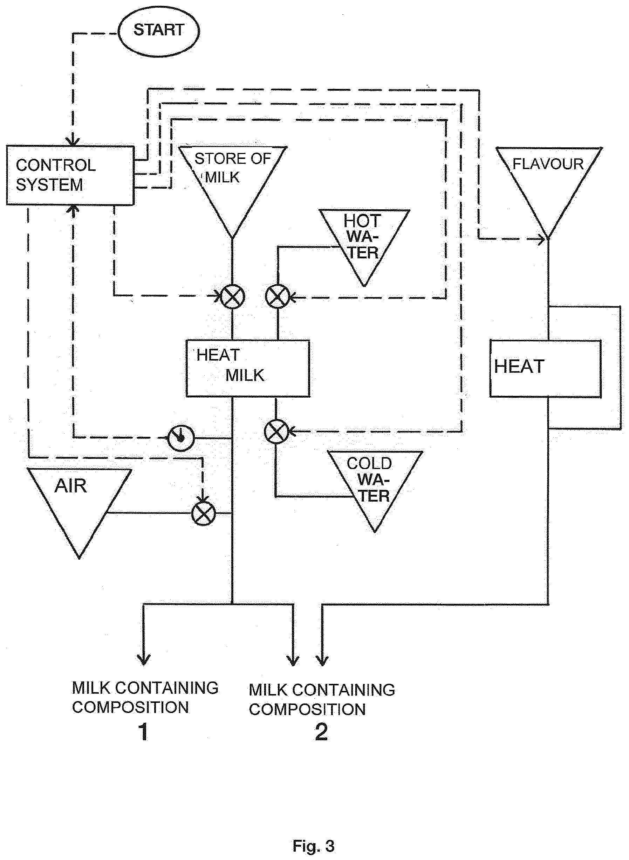

Hereinafter an embodiment of a method according to the present invention, in which the above-described heat exchanger can be used, will be described by way of non-exhaustive example with reference to figure 3.

According to the method, for example, a milk storage in the form of a store of (possibly cooled) milk as the milk product is provided, preferably in a hermetically sealed container as the package. To obtain a milk-containing composition, to be referred to below as "hot beverage", which may be in the form of froth, for example, the method is initiated by a control system, for example by operating a button "start" of an apparatus in which at least part of the present method is carried out.

Upon initiation of the method, a valve is operated, via which valve, depending on the milk-containing composition to be dispensed, a specified amount of milk is led from the store to a heat exchanger, in which the milk is heated under the control of the control system. After the milk has been heated by the heat exchanger, a flavour composition is added to the milk. This can take place in one or more steps: a) Air is introduced into the milk so as to cause the milk to froth; b) A liquid or solid composition is added to the heated milk so as to flavour the milk; c) A combination of a) and b), wherein a) and b) can be carried out in random order, possibly even one or more times each.

The heat exchanger is a continuous heat exchanger, in which milk product flows from the product inlet, via a flexible tube, to a product outlet while being heated from outside. Said heating from outside takes place by means of a heating medium, which is present in an envelope of the flexible tube and which can be supplied or discharged through a medium inlet and a medium outlet, respectively. To that end a store of hot water and a store of cold water are provided in this example, which stores are in interruptible communication with the envelope of the heat exchanger via valves. The hot and cold water flow in opposite directions through the heat exchanger (it is, incidentally, conceivable that two parallel circuits of cold water on the one hand and hot water on the other hand, which converge in the heat exchanger, are provided and that the valves are three-way valves for separating the circuits in question).

At the end of the process of discharging heated milk from the heat exchanger via the product outlet, the flexible tube is forcibly emptied, which means that as much heated milk present in the flexible tube as possible is evacuated from the flexible tube under the influence of a force, for example an external force, or the force of gravity, after the product inlet of the heat exchanger has been closed. Then timekeeping is started, symbolically represented by means of a clock symbol, by which the length of time from the last discharge of milk from the heat exchanger is registered. The force may be an external force, but it may also be restricted to the force of gravity.

The period of time is monitored by the control system. If a next amount of milk is to be heated by means of the heat exchanger before a set period of time (predetermined period of time) is exceeded, which is indicated, for example, by operating the starting button of the apparatus again, a specified amount of milk is again led from the store to the heat exchanger for being heated and timekeeping is started at the end of the heating cycle as described above.

When said period of time as registered by the timekeeping exceeds a specified value (predetermined period of time), however, cooling of the milk in the flexible tube of the heat exchanger is initiated. This can be done in various ways, for example in that the control system controls the valves between the water stores and the heat exchanger. The supply of heating medium can thus be switched over to a supply of cooling medium, and the discharge of heating medium can be switched over to a discharge of cooling medium. Alternatively, the cooling medium may be supplied to the envelope in reverse order, so that cooling medium is supplied through the medium outlet (intended for the discharge of hot medium while heating takes place) and be discharged by the medium inlet (intended for supplying hot medium while heating takes place). These are only a few possibilities.

In an alternative method, timekeeping can be started at a position further downstream. Starting the timekeeping preferably takes place in relation to the removal of heated milk from the heat exchanger.

After milk has been heated in the heat exchanger, a single or multiple flavour composition, which may or may not be preheated, can be admixed to the heated milk from a store of air and/or a store of flavouring substance in one or more steps under the control of the control system. For example as already air-frothed heated milk (milk-containing composition 1) or as air-frothed or non-frothed milk mixed with a (further) flavour composition (milk-containing composition 2). This may take place inside or outside an apparatus in which the heat exchanger is incorporated, in the former case outside or even inside a heat exchanger module. Mixing may also take place manually outside the apparatus, if desired, if heated milk is collected in a jug for subsequent pouring.

The method makes it possible on the one hand to cool the milk in the heat exchanger so as to prevent deterioration and on the other hand to delay cooling for a specified length of time so as to save energy. Depending on the location and the time of usage, a relatively short predetermined period of time can thus be set for situation in which the period between two heating processes is expected to be relatively long so as to prevent prolonged exposure of the milk in the heat exchanger. On the other hand, if relatively frequent dispensing actions are expected, a relatively long period of time can be set in order to prevent frequent cooling and heating in situations in which limited bacterial growth is expected on account of a relatively short residence time of remaining milk in the heat exchanger.

The method according to the invention, and as described above, can be carried out entirely or partially in a vending machine. The heat exchanger and the milk package are preferably placed as one unit in the apparatus or vending machine. Said unit of packaged milk and heat exchanger will already be provided with the desired connections between the packaged milk and the heat exchanger in that case, with conduit 3 forming the connection between the "BIB" package and the heat exchanger. An advantage of such a package is that the whole can be cleared of bacteria prior to the filling with milk. Because the circuit is closed, at least up to the product outlet of the heat exchanger, bacteria cannot get to the milk from outside.

A specific structure of a heat exchanger suitable for use in the present invention is described in non-pre-published International patent application PCT/NL2012/050344. Preferably, the heat exchanger is therefore designed so that the flexible supply line to the heat exchanger of the product to be cooled/heated is connected to a product package in which a particular amount of perishable product is present, whilst the coil of the heat exchanger is surrounded by an outer bag for the supply and discharge of the heating/cooling medium, which is preferably water.

For reasons of hygiene it is preferable if the heat exchanger and the milk product package can be placed in an apparatus or a vending machine as one unit. A further advantage of this is that the milk product package and the heat exchanger can be placed into the vending machine and be removed therefrom in one movement. Apparatuses in which milk, or at least a milk product, is heated, and possibly frothed, for example for making a product consisting of coffee and milk, are generally known. There are many variants of espresso machines, from very simple to very complex. For that reason a description of such apparatus is not included herein. Existing apparatus can be easily adapted, if desired, for use in such a method by exchanging a system for heating a milk product that may be present for a heat exchanger according to the invention and integrating a timer in the control system of the apparatus, wherein the registered time is linked to a pre-set (adjustable) period of time for initiating the cooling of the heat exchanger at some point.

The method can be carried out with various levels of automation in apparatus. A highly automated embodiment is one in which all the ingredients, such as milk product, coffee, water, air, are put into an apparatus and brought together therein. Frequently an apparatus, such as a coffee maker, is provided with a separate outflow opening for flavour composition (coffee) and a separate outflow for milk that may or may not be frothed, i.e. milk-containing composition, within the context of the present document.

Besides being suitable for use in a vending machine for preparing a product that is ready for consumption, the method according to the invention and the heat exchanger can also be used in standalone apparatus, so that the designation "vending machine" also includes such standalone apparatus. In such apparatus, the (frothed) milk-containing composition is not added to the coffee in the apparatus but separately poured into the cup of coffee by the user, usually a catering entrepreneur. In addition to the methods as described above, the following dispensing situations are in that case conceivable: 1) a standalone apparatus which is only capable of heating and possibly frothing a milk product: the milk product/milk-containing composition is then dispensed in a jug (for example 250-500 ml). The user pours for example 80 ml of the heated milk product/(frothed) milk-containing composition on the coffee which is already present in the cup and which may have been separately dispensed into the cup by a coffee machine. The milk product/milk-containing composition and the (further) flavour composition are then mixed in the coffee cup by the user. The remaining heated milk product/other (frothed) milk-containing composition that remains behind in the jug can be used for preparing a next milk-containing coffee. 2) a standalone apparatus which is connected to any coffee machine and which, just like in situation 1), is only capable of heating and possibly frothing the milk product. The heated milk-containing product/milk-containing composition is integrated in the existing coffee machine via a hose that extends from the milk apparatus. The hot milk product/hot (frothed) milk-containing composition is in that case dispensed via the coffee machine, therefore. The conduit for heated milk-containing product/milk-containing composition is a conduit separate from the coffee conduit. The milk product/milk-containing composition and the (further) flavour composition are thus mixed in the coffee cup by the two machines to obtain the final desired milk-containing composition.

## Claims

1. A method for dispensing a milk-containing composition consisting of a flavour composition and a milk product by supplying the milk product at least in part to a removable heat exchanger (1, 11) provided with a flexible tube (2), wherein the flavour composition is supplied to the heated milk product in random order after the heat exchanger, **characterised in that** the milk product that remains in the heat exchanger after the latter has been emptied for the larger part is cooled by means of the heat exchanger after a specified period of time, calculated from the last time dispensing of the milk-containing composition took place, so that it will keep for a comparatively prolonged period of time, and is subsequently heated and replenished with a next amount of milk product for a next dispensing action shortly before being mixed with the flavour composition, whereupon the hot milk-containing composition is discharged hot.

2. A method for dispensing a milk-containing composition consisting of a flavour composition and a milk product by supplying the milk product at least in part to a removable heat exchanger (1, 11) provided with a flexible tube (2), wherein the flavour composition is supplied to the heated milk product in random order after the heat exchanger, **characterised in that** the milk product that remains in the heat exchanger after the latter has been emptied for the larger part is cooled by means of the heat exchanger after a specified period of time, calculated from the last time dispensing of the heated milk product from the heat exchanger took place, so that it will keep for a comparatively prolonged period of time, and is subsequently heated and replenished for a next dispensing action with a next amount of milk product shortly before being mixed with the flavour composition, whereupon the hot milk-containing composition is discharged hot.

3. A method according to claim 1 or 2, **characterised in that** when heating of the milk product takes place, the milk product flows through the flexible tube of the heat exchanger (1, 11) so as to be heated, and that when the heat exchanger is being emptied for the most part, milk product is removed from the flexible tube of the heat exchanger, wherein preferably at least 50% of the milk product present in the heat exchanger is removed from the heat exchanger when the heat exchanger is emptied for the most part.

4. A method according to one or more of claims 1-3, **characterised in that** the period of time between two discharges of a milk-containing composition or of a heated milk product is determined and that the heat exchanger (1, 11) is emptied for the greater part when a predetermined period of time is exceeded, wherein in particular the milk product that remains behind in the heat exchanger in an amount of 10-25 vol. % of the capacity of the heat exchanger coil is cooled so as to minimise deterioration.

5. A method according to one or more of claims 1-3, **characterised in that** the period of time between two supplies of the milk product to the heat exchanger (1, 11) is determined and that the heat exchanger is emptied for the greater part when a predetermined period of time is exceeded, wherein in particular the milk product that remains behind in the heat exchanger in an amount of 10-25 vol. % of the capacity of the heat exchanger coil is cooled so as to minimise deterioration.

6. A method according to claim 4 or 5, **characterised in that** the predetermined period of time to be exceeded before cooling is initiated is set to at least 5 minutes, preferably to 5 - 30 minutes.

7. A method according to one or more of claims 1-6, **characterised in that** a flavour composition, such as coffee, is added to 40-200 ml - as the user desires - of heated milk product, and that in a heat exchanger (1, 11) having a capacity of about 20 ml the last part of milk product is removed from the heat exchanger and the remaining, film-like amount of milk product is cooled.

8. A method according to one or more of claims 1-7, **characterised in that** the removable heat exchanger is not cleaned by rinsing and/or cleaning but is removed from a holder instead being cleaned.

9. A method according to one or more of claims 1-8, **characterised in that** the supply of the milk product to the heat exchanger takes place continuously during the delivery of the heated milk product and that when the last amount of milk product that is required is present in the heat exchanger, said amount is for the most part forced out of the heat exchanger, so that only 10-25 vol. % of the heated milk product will remain behind in the heat exchanger.

10. A method according to one or more of claims 1-9, **characterised in that** the heat exchanger is communicatively connected to a package of the milk product and that the removal of the heat exchanger is carried out together with the removal of the entirely or partially emptied package of the milk product.

11. A disposable heat exchanger (1, 11) provided with a flexible coil (2) and a product inlet (3) and a product outlet (4) for a perishable product, such as a milk product, on the one hand and with a medium inlet (8) and a medium outlet (7) for a cooling or heating medium on the other hand, **characterised in that** the product inlet of the heat exchanger of the product to be cooled/heated is connected, or at least is to be connected, to a product package in which a particular amount of perishable product is present, wherein the product outlet of the heat exchanger can be combined with a flavour composition inlet (10) of the flavour composition and wherein the coil (2) of the heat exchanger (1, 11) is surrounded by the outer bag (6) for the supply and discharge of the heating/cooling medium, which heat exchanger is designed for use in a method according to one or more of claims 1-10, wherein the heat exchanger (1, 11) is provided with connecting means for connecting the product outlet (4) to a flavour composition inlet (10).

12. A disposable heat exchanger according to claim 11, **characterised in that** the discharge line (4) of the heat exchanger is provided with an air inlet (10) for frothing the heated milk product, wherein preferably the heat exchanger is provided with a frothing module (5), which is preferably disposed within the heat exchanger.

13. A disposable heat exchanger according to one or more of claims 11-12 **characterised in that** a water inlet is provided near a supply line for the supply of the milk product, which water inlet is designed for diluting a milk product concentrate to be used, wherein preferably the heat exchanger and the package of the milk product are designed as an integral unit, wherein the inlet of the milk product of the heat exchanger is located inside the unit and the outlet of the heat exchanger is provided outside the unit.

14. A whole of heat exchanger and package comprising, or at least containing, the packaged milk product, **characterised in that** the product package is of the "bag-in-box (BIB)" and the heat exchanger is a heat exchanger according to one or more of claims 11-13.

15. A vending machine provided with an inlet for the flavour composition and with a packaged milk product connected to a heat exchanger, **characterised in that** a method according to one or more of claims 1-10 is used in the vending machine, and/or provided with a disposable heat exchanger according to one or more of claims 11-14.

## Patentansprüche

1. Verfahren zur Abgabe einer milchhaltigen Zusammensetzung, die aus einer Aromazusammensetzung und einem Milchprodukt besteht, indem das Milchprodukt wenigstens teilweise einem abnehmbaren Wärmetauscher (1, 11) zugeführt wird, der ein flexibles Rohr (2) aufweist, wobei die Aromazusammensetzung dem erhitzten Milchprodukt in zufälliger Reihenfolge hinter dem Wärmetauscher zugeführt wird,
**dadurch gekennzeichnet, dass**
das Milchprodukt, das in dem Wärmetauscher verbleibt, nachdem dieser zum größeren Teil geleert worden ist, durch den Wärmetauscher nach einer festgelegten Zeitspanne, die vom letzten Zeitpunkt des Stattfindens der Abgabe der milchhaltigen Zusammensetzung gerechnet wird, gekühlt wird, sodass das in dem Wärmetauscher verbleibende Milchprodukt für eine verhältnismäßig lange Zeitspanne haltbar bleibt, und dass das in dem Wärmetauscher verbleibende Milchprodukt anschließend für einen nächsten Abgabevorgang mit einer nächsten Menge des Milchprodukts erhitzt und aufgefüllt wird, kurz bevor es mit der Aromazusammensetzung vermischt wird, woraufhin die heiße milchhaltige Zusammensetzung in heißem Zustand abgegeben wird.

2. Verfahren zur Abgabe einer milchhaltigen Zusammensetzung, die aus einer Aromazusammensetzung und einem Milchprodukt besteht, indem das Milchprodukt wenigstens teilweise einem abnehmbaren Wärmetauscher (1, 11) zugeführt wird, der ein flexibles Rohr (2) aufweist, wobei die Aromazusammensetzung dem erhitzten Milchprodukt in zufälliger Reihenfolge hinter dem Wärmetauscher zugeführt wird,
**dadurch gekennzeichnet, dass**
das Milchprodukt, das in dem Wärmetauscher verbleibt, nachdem dieser zum größeren Teil geleert worden ist, durch den Wärmetauscher nach einer festgelegten Zeitspanne, die vom letzten Zeitpunkt des Stattfindens der Abgabe des heißen Milchprodukts durch den Wärmetauscher gerechnet wird, gekühlt wird, sodass das in dem Wärmetauscher verbleibende Milchprodukt für eine verhältnismäßig lange Zeitspanne haltbar bleibt, und dass das in dem Wärmetauscher verbleibende Milchprodukt anschließend für einen nächsten Abgabevorgang mit einer nächsten Menge des Milchprodukts erhitzt und aufgefüllt wird, kurz bevor es mit der Aromazusammensetzung vermischt wird, woraufhin die heiße milchhaltige Zusammensetzung in heißem Zustand abgegeben wird.

3. Verfahren nach Anspruch 1 oder 2,
**dadurch gekennzeichnet, dass,**
wenn das Erhitzen des Milchproduktes stattfindet, das Milchprodukt durch das flexible Rohr des Wärmetauschers (1, 11) fließt, sodass das Milchprodukt erhitzt wird, und dass, wenn der Wärmetauscher zum größten Teil geleert wird, das Milchprodukt aus dem flexiblen Rohr des Wärmetauschers entfernt wird, wobei vorzugsweise wenigstens 50 % des in dem Wärmetauscher vorhandenen Milchprodukts aus dem Wärmetauscher entfernt wird, wenn der Wärmetauscher zum größten Teil geleert wird.

4. Verfahren nach einem oder mehreren der Ansprüche 1 bis 3,
**dadurch gekennzeichnet, dass**
die Zeitspanne zwischen zwei Abgaben einer milchhaltigen Zusammensetzung oder eines erhitzten Milchproduktes bestimmt ist und dass der Wärmetauscher (1, 11) größtenteils geleert wird, wenn eine vorbestimmte Zeitspanne abgelaufen ist, wobei insbesondere das Milchprodukt, das in Höhe von 10 Volumen-% bis 25 Volumen-% des Fassungsvermögens des WärmetauscherSchlauchrohr in dem Wärmetauscher zurückbleibt, gekühlt wird, um Verderben zu minimieren.

5. Verfahren nach einem oder mehreren der Ansprüche 1 bis 3,
**dadurch gekennzeichnet, dass**
die Zeitspanne zwischen zwei Vorgängen, bei denen das Milchprodukt dem Wärmetauscher (1, 11) zugeführt wird, bestimmt ist und dass der Wärmetauscher größtenteils geleert wird, wenn eine vorbestimmte Zeitspanne abgelaufen ist, wobei insbesondere das Milchprodukt, das in Höhe von 10 Volumen-% bis 25 Volumen-% des Fassungsvermögens des WärmetauscherSchlauchrohr in dem Wärmetauscher zurückbleibt, gekühlt wird, um Verderben zu minimieren.

6. Verfahren nach Anspruch 4 oder 5,
**dadurch gekennzeichnet, dass**
die vorbestimmte Zeitspanne, die abgelaufen sein muss, bevor das Kühlen initiiert wird, auf wenigstens 5 min gesetzt wird, vorzugsweise auf 5 min bis 30 min.

7. Verfahren nach einem oder mehreren der Ansprüche 1 bis 6,
**dadurch gekennzeichnet, dass**
eine Aromazusammensetzung, wie beispielsweise Kaffee, zu 40 ml bis 200 ml - je nach Wunsch des Benutzers - des erhitzen Milchprodukts hinzugefügt wird und dass in einem Wärmetauscher (1, 11), der ein Fassungsvermögen von ca. 20 ml aufweist, der letzte Teil des Milchprodukts aus dem Wärmetauscher entfernt wird und die verbleibende, filmartige Menge des Milchproduktes gekühlt wird.

8. Verfahren nach einem oder mehreren der Ansprüche 1 bis 7,
**dadurch gekennzeichnet, dass**
der abnehmbare Wärmetauscher nicht durch Spülen und/oder Reinigen gesäubert wird, sondern von einer Halterung abgenommen wird anstatt gesäubert zu werden.

9. Verfahren nach einem oder mehreren der Ansprüche 1 bis 8,
**dadurch gekennzeichnet, dass**
das Milchprodukt dem Wärmetauscher während der Abgabe des erhitzten Milchproduktes kontinuierlich zugeführt wird und dass, wenn die letzte Menge des Milchprodukts, die benötigt wird, in dem Wärmetauscher vorhanden ist, die genannte Menge zum größten Teil aus dem Wärmetauscher verdrängt wird, sodass lediglich 10 Volumen-% bis 25 Volumen-% des erhitzten Milchprodukts in dem Wärmetauscher zurückbleiben.

10. Verfahren nach einem oder mehreren der Ansprüche 1 bis 9,
**dadurch gekennzeichnet, dass**
der Wärmetauscher kommunizierend mit einer Packung des Milchprodukts verbunden ist und dass die Demontage des Wärmetauschers zusammen mit der Demontage der vollständig oder teilweise geleerten Packung des Milchprodukts durchgeführt wird.

11. Einwegwärmetauscher (1, 11), der ein flexible Schlauchrohr (2), einen Produkteinlass (3) und einen Produktauslass (4) für ein verderbliches Produkt, wie beispielsweise ein Milchprodukt, einerseits und einen Mediumeinlass (8) und einen Mediumauslass (7) für ein Kühlmittel oder Heizmittel andererseits aufweist,
**dadurch gekennzeichnet, dass**
der Produkteinlass des Wärmetauschers des zu kühlenden/erhitzenden Produkts mit einer Produktpackung verbunden oder wenigstens zu verbinden ist, in der eine bestimmte Menge eines verderblichen Produkts vorhanden ist, wobei der Produktauslass des Wärmetauschers mit einem Aromazusammensetzungseinlass (10) der Aromazusammensetzung kombiniert werden kann und wobei das Schlauchrohr (2) des Wärmetauschers (1, 11) von dem äußeren Beutel (6) für die Zufuhr und die Ableitung des Kühlmittels/Heizmittels umgeben ist, wobei der Wärmetauscher für die Verwendung in einem Verfahren nach einem oder mehreren der Ansprüche 1 bis 10 konzipiert ist, wobei der Wärmetauscher (1, 11) Verbindungsmittel zum Verbinden des Produktauslasses (4) mit einem Aromazusammensetzungseinlass (10) aufweist.

12. Einwegwärmetauscher nach Anspruch 11,
**dadurch gekennzeichnet, dass**
die Auslassleitung (4) des Wärmetauschers einen Lufteinlass (10) zum Aufschäumen des erhitzen Milchprodukts aufweist, wobei vorzugsweise der Wärmetauscher ein Aufschäummodul (5) aufweist, das vorzugsweise in dem Wärmetauscher angeordnet ist.

13. Einwegwärmetauscher nach einem oder mehreren der Ansprüche 11 bis 12,
**dadurch gekennzeichnet, dass**
ein Wassereinlass nahe einer Zuführleitung zum Zuführen des Milchproduktes vorgesehen ist, wobei der Wassereinlass zur Verdünnung eines zu verwendenden Milchproduktkonzentrats konzipiert ist, wobei vorzugsweise der Wärmetauscher und die Packung des Milchproduktes als integrale Einheit konzipiert sind, wobei sich der Einlass des Milchprodukts des Wärmetauschers innerhalb der Einheit befindet und der Auslass des Wärmetauschers außerhalb der Einheit vorgesehen ist.

14. Gesamtheit von Wärmetauscher und Packung, umfassend, oder wenigstens beinhaltend, das verpackte Milchprodukt,
**dadurch gekennzeichnet, dass**
die Produktpackung vom Typ "bag-in-box (BIB)" und der Wärmetauscher ein Wärmetauscher nach einem oder mehreren der Ansprüche 11 bis 13 ist.

15. Verkaufsautomat, umfassend einen Einlass für die Aromazusammensetzung und ein verpacktes Milchprodukt, das mit einem Wärmetauscher verbunden ist, **dadurch gekennzeichnet, dass**
ein Verfahren nach einem oder mehreren der Ansprüche 1 bis 10 in dem Verkaufsautomat verwendet wird und/oder dass der Verkaufsautomat einen Einwegwärmetauscher nach einem oder mehreren der Ansprüche 11 bis 14 aufweist.

## Revendications

1. Procédé de distribution d'une composition contenant du lait constituée d'une composition aromatisante et d'un produit laitier en alimentant le produit laitier, au moins en partie, dans un échangeur de chaleur amovible (1, 11) pourvu d'un tube flexible (2), où la composition aromatisante est ajoutée au produit laitier chauffé dans un ordre aléatoire après l'échangeur de chaleur, **caractérisé en ce que** le produit laitier qui reste dans l'échangeur de chaleur après que ce dernier a été en grande partie vidé est refroidi au moyen de l'échangeur de chaleur après une durée spécifiée, calculée à partir du dernier moment où la distribution de la composition contenant du lait a eu lieu, de manière à le conserver pendant une durée relativement prolongée, et est ensuite chauffé et complété avec une quantité de produit laitier suivante pour une action de distribution suivante peu de temps avant d'être mélangé avec la composition aromatisante, après quoi la composition chaude contenant du lait est déchargée à chaud.

2. Procédé de distribution d'une composition contenant du lait constituée d'une composition aromatisante et d'un produit laitier en alimentant le produit laitier, au moins en partie, dans un échangeur de chaleur amovible (1, 11) pourvu d'un tube flexible (2), où la composition aromatisante est ajoutée au produit laitier chauffé dans un ordre aléatoire après l'échangeur de chaleur, **caractérisé en ce que** le produit laitier qui reste dans l'échangeur de chaleur après que ce dernier a été en grande partie vidé est refroidi au moyen de l'échangeur de chaleur après une durée spécifiée, calculée à partir du dernier moment où la distribution du produit laitier chauffé à partir de l'échangeur de chaleur a eu lieu, de manière à le conserver pendant une durée relativement prolongée, et est ensuite chauffé et complété pour une action de distribution suivante avec une quantité de produit laitier suivante peu de temps avant d'être mélangé avec la composition aromatisante, après quoi la composition chaude contenant du lait est déchargée à chaud.

3. Procédé selon la revendication 1 ou 2, **caractérisé en ce que**, lors du chauffage du produit laitier, le produit laitier s'écoule à travers le tube flexible de l'échangeur de chaleur (1, 11) de façon à être chauffé, et **en ce que**, lorsque l'échangeur de chaleur est en grande partie vidé, de produit laitier est retiré du tube flexible de l'échangeur de chaleur, où de préférence au moins 50% du produit laitier présent dans l'échangeur de chaleur sont retirés de l'échangeur de chaleur lorsque l'échangeur de chaleur est en grande partie vidé.

4. Procédé selon une ou plusieurs des revendications 1 à 3, **caractérisé en ce que** la durée entre deux décharges d'une composition contenant du lait ou d'un produit laitier chauffé est déterminée et **en ce que** l'échangeur de chaleur (1, 11) est en grande partie vidé lorsqu'une durée prédéterminée est dépassée, où en particulier le produit laitier qui reste présent dans l'échangeur de chaleur en une quantité allant de 10 à 25% en volume de la capacité du serpentin d'échangeur de chaleur est refroidi de façon à minimiser la détérioration.

5. Procédé selon une ou plusieurs des revendications 1 à 3, **caractérisé en ce que** la durée entre deux alimentations de l'échangeur de chaleur (1, 11) en produit laitier est déterminée et **en ce que** l'échangeur de chaleur est en grande partie vidé lorsqu'une durée prédéterminée est dépassée, où en particulier le produit laitier qui reste présent dans l'échangeur de chaleur en une quantité allant de 10 à 25% en volume de la capacité du serpentin d'échangeur de chaleur est refroidi de façon à minimiser la détérioration.

6. Procédé selon la revendication 4 ou 5, **caractérisé en ce que** la durée prédéterminée devant être dépassée avant le début du refroidissement est réglée sur au moins 5 minutes, de préférence entre 5 et 30 minutes.

7. Procédé selon une ou plusieurs des revendications 1 à 6, **caractérisé en ce qu'**une composition aromatisante, telle que le café, est ajoutée à un volume compris entre 40 et 200 ml - selon le souhait de l'utilisateur - du produit laitier chauffé, et **en ce que** dans un échangeur de chaleur (1, 11) ayant une capacité d'environ 20 ml la dernière partie du produit laitier est retirée de l'échangeur de chaleur et la quantité restante de produit laitier semblable à un film est refroidie.

8. Procédé selon une ou plusieurs des revendications 1 à 7, **caractérisé en ce que** l'échangeur de chaleur amovible n'est pas nettoyé par rinçage et/ou lavage mais il est retiré d'un support au lieu d'être nettoyé.

9. Procédé selon une ou plusieurs des revendications 1 à 8, **caractérisé en ce que** l'alimentation de l'échangeur de chaleur en produit laitier a lieu de manière continue pendant la distribution du produit laitier chauffé et **en ce que**, lorsque la dernière quantité de produit laitier qui est nécessaire est présente dans l'échangeur de chaleur, ladite quantité est en grande partie forcée dehors de l'échangeur de chaleur, de sorte que seulement 10 à 25% en volume du produit laitier chauffé restent présents dans l'échangeur de chaleur.

10. Procédé selon une ou plusieurs des revendications 1 à 9, **caractérisé en ce que** l'échangeur de chaleur est relié en communication à un emballage du produit laitier et **en ce que** le retrait de l'échangeur de chaleur est réalisé conjointement avec le retrait de l'emballage entièrement ou partiellement vidé du produit laitier.

11. Échangeur de chaleur jetable (1, 11) pourvu d'un serpentin flexible (2) et d'une entrée de produit (3) et d'une sortie de produit (4) pour un produit périssable, tel qu'un produit laitier, d'une part et d'une entrée de fluide (8) et d'une sortie de fluide (7) pour un fluide de refroidissement ou de chauffage d'autre part, **caractérisé en ce que** l'entrée de produit de l'échangeur de chaleur du produit à refroidir/chauffer est reliée, ou au moins doit être reliée, à un emballage de produit dans lequel une quantité spécifique de produit périssable est présente, où la sortie de produit de l'échangeur de chaleur peut être combinée avec une entrée de composition aromatisante (10) de la composition aromatisante et où le serpentin (2) de l'échangeur de chaleur (1, 11) est entouré par le sac extérieur (6) pour l'alimentation en fluide de chauffage/refroidissement et la décharge de celui-ci, lequel échangeur de chaleur est conçu pour une utilisation dans un procédé selon une ou plusieurs des revendications 1 à 10, où l'échangeur de chaleur (1, 11) est pourvu de moyens de liaison pour relier la sortie de produit (4) à une entrée de composition aromatisante (10).

12. Échangeur de chaleur jetable selon la revendication 11, **caractérisé en ce que** la conduite de décharge (4) de l'échangeur de chaleur est pourvue d'une entrée d'air (10) pour faire mousser le produit laitier chauffé, où de préférence l'échangeur de chaleur est pourvu d'un module de moussage (5), qui est de préférence disposé dans l'échangeur de chaleur.

13. Échangeur de chaleur jetable selon une ou plusieurs des revendications 11 et 12, **caractérisé en ce qu'**une entrée d'eau est prévue à proximité d'une conduite d'alimentation pour l'alimentation du produit laitier, laquelle entrée d'eau est conçue pour diluer un concentré de produit laitier à utiliser, où de préférence l'échangeur de chaleur et l'emballage du produit laitier sont conçus sous forme d'unité monobloc, où l'entrée du produit laitier de l'échangeur de chaleur est située à l'intérieur de l'unité et la sortie de l'échangeur de chaleur est prévue à l'extérieur de l'unité.

14. Ensemble d'un échangeur de chaleur et d'un emballage comprenant, ou au moins contenant, le produit laitier emballé, **caractérisé en ce que** l'emballage de produit est du type "caisse-outre (BIB)" et l'échangeur de chaleur est un échangeur de chaleur selon une ou plusieurs des revendications 11 à 13.

15. Distributeur automatique pourvu d'une entrée pour la composition aromatisante et d'un produit laitier emballé relié à un échangeur de chaleur, **caractérisé en ce qu'**un procédé selon une ou plusieurs des revendications 1 à 10 est utilisé dans le distributeur automatique, et/ou pourvu d'un échangeur de chaleur jetable selon une ou plusieurs des revendications 11 à 14.
